# EUROPEAN PATENT APPLICATION

(11) **EP 0 695 662 A1**
(43) Date of publication of application: **07.02.1996**
(21) Application number: 94305791.9
(22) Date of filing: 04.08.1994
(51) Int. Cl.: B60K 7/00, B62M 7/12, H02K 21/26, H02K 23/04, H02K 13/00, H02K 7/102, H01R 39/10, H01R 39/06

(54) **A driving assembly for motor wheels and method of making the same**

(71) Applicant: Yang, Chen-Chi, Chia-Yi City (TW)
(72) Inventor: Yang, Chen-Chi, Chia-Yi City (TW)
(74) Representative: Linn, Samuel Jonathan

(57) **Abstract**

An assembly for driving motor wheels and method of making the same including providing a plurality of radially distributed permanent magnets (22) on a fixed axle (5) to form a stator (2) supported by bearings (71) thereon, the magnets (22) being parallel to the axle (5); a brake element (8) controlling the stator's rotation; and a rotor (3) formed of induction winding coils (4) pivotally disposed around the stator (2), the rotor (3) and the stator (2) generating therebetween an induction field to drive the rotor (3) to rotate. When the rotor (3) rotates, the power generated is directly or indirectly transmitted via a reduction mechanism (6) to the hub to drive the motor wheel; the electric current is transmitted via conductive elements fixed on the axle (5) and an annular printed-circuit board (43) to the winding coils (4) of the rotor (3).

## Description

The present invention relates generally to an assembly for driving motor wheels and method of making the same, and more particularly to an assembly for driving the hub of an electromotive wheel to rotate while the axle thereof remains immobile and a method of making the same.

There are mainly two methods of driving a motor wheel to rotate. In the first method which is widely applied in the field, the hub of the wheel is interlocked with the axle of the wheel and the axle is mounted pivotally on a frame support by means of bearings so that when power drives the axle to rotate, the wheel is caused to rotate therewith. The second method utilizes an induction electromagnetic field generated inside the hub to drive the wheel and it is rarely adopted; until now there is not any satisfactory product in the market. This method comprises fastening the axle on the frame support so that the axle cannot rotate, providing on the axle a stator formed by conducting an electric current through a plurality of winding coils, and arranging a plurality of permanent magnets capable of common rotation with the hub in the interior thereof to constitute a rotor, the electromagnetic field thus generated between the stator and the rotor drives the rotor to rotate, thereby driving the hub to rotate therewith. This prior method is disclosed in U.S. Pat Nos. 5,207,288 and 4,913,258.

The second method wherein the induction electromagnetic field inside the hub is utilized to drive the hub was once adopted by Fiat in developing an electromotive wheel. But since the heat generated by the winding coils on the axle cannot be easily dissipated, if an excellent heat dissipation method is not adopted in conjunction therewith, such a design is incapable of driving the wheel to rotate at a high speed or to continue rotation for a long period of time. Because high-speed rotation requires a considerable supply of electric current, and a long period of continuous rotation requires continuous power supply, the winding coils may generate intense heat resulting in possible burning and short-circuit.

The problem existing in the prior method wherein the induction electromagnetic field in the interior of hub is used to drive the wheel often occurs when an electric vehicle continues moving up a slope. Although the winding coils of the stator on the axle receives a very considerable supply of electric currents, the rotation of the wheels is still slow, and although the lateral sides of the wheels are provided with cooling fans or cooling fins as known in the art to enhance the flow of ambient air through the interior of the wheels to dissipate the intense heat generated by the winding coils, the heat generated cannot be ideally dissipated. This results in the continuous rise in temperature of the winding coils, while the output force of the induction electromagnetic field decreases. Another problem inherent in this method is that when power cannot be supplied to the winding coils of the stator, the silicon steel sheets in the winding coils and the permanent magnets on the rotor will attract each other, subjecting the wheel to a great resisting force when idle running; in other words, when an electric vehicle applying this conventional method of driving mechanism happens to run out of power so that power Supply to the winding coils is interrupted, it will be much more difficult to push the vehicle.

In the above-described method of utilizing the induction field to drive motor wheels, the reason why the permanent magnets cannot be arranged on the stator so that the winding coils are relatively arranged on the rotor in the hub is due to the fact that no ideal solution has been found to satisfactorily supply power to the winding coils in rotation and to overcome the difficulty in assembly if the above arrangement is put into practice. Therefore, the idea of arranging the winding coils on the rotor has not been ideally realized.

The above-mentioned drawbacks in the prior art will be reduced by the present invention so that the technique of driving motor wheels by means of the induction electromagnetic field may have a more prominent effect. Therefore, the method according to the present invention is more suitable for motor wheels moving slowly up a slope or other low-speed vehicles such as bicycles and wheelchairs.

An aspect of the present invention is to provide a rotor formed of a plurality of winding coils corresponding to a stator formed of a plurality of permanent magnets of e.g. a rare earth metal on a fixed axle of a motor wheel, an induction electromagnetic field being generated when an electric current is conducted through the winding coils to rotate the rotor. As is well known to those skilled in the art of electrical engineering, after the induction electromagnetic is formed, the winding coils will continue to generate intense heat, and if the heat is not properly dissipated, the effect of the induction field will be decreased, and the insulated films may possibly burn to cause the coils to be short-circuited. In the present invention the winding coils are arranged on the rotor to utilize the centrifugal current generated in rotation to more effectively dissipate the heat emitted by the winding coils.

Another aspect of the present invention is to supply an electric current to the winding coils on the rotor using a most ideal method, wherein a rotary annular printed-circuit board type conductive plate is fastened onto an insulated surface plate on a lateral side of the wheel frame, the printed-circuit board having a group of radially distributed conductive sheets in an inner area thereof interconnected with a group of radially distributed conductive sheets in an outer area thereof, wherein the former is provided for contact with a plurality of conductive elements such as carbon brushes attached onto a securing element on the axle, whereas the latter is connected respectively to each winding coil on the rotor so that the electric current may pass through the carbon brushes and the printed-circuit board to supply power to each winding coil on the rotor.

A further aspect of the present invention is to provide a technology wherein the rotational power of a rotor formed of winding coils is reduced by a reduction mechanism before being transmitted to the hub to drive the motor wheel to rotate at low speed. In the present invention, the rotor is fastened within an inner wheel frame capable of rotation on the axle, and the rotor rotates by means of the induction electromagnetic field generated between itself and a stator formed of a plurality of permanent magnets of a rare earth metal, thereby bringing the inner wheel frame to rotate therewith, the inner wheel frame having a lateral side thereof pivotally provided with a driving gear of a reduction mechanism constituted by a planetary gear set to drive the reduction mechanism to lower the rotation speed. A driven output gear of the reduction mechanism is pivotally provided in an outer wheel frame which is used as the hub of the wheel. The present invention reduces rotation speed so that it is suited for use in bicycles, wheelchairs and similar low-speed vehicles.

A still further aspect of the present invention is to provide a hub driven by an induction electromagnetic field, the hub being driven by a rotor formed of winding coils rotating round a stator on a solid axle. The hub according to the present invention has one lateral side thereof provided with a screw hole for engagement with a wheel of a speed changer of the conventional pulley or chain type; in other words, the conventional speed changer may be adopted for engagement with the hub according to the present invention and to be driven thereby.

Still another aspect of the present invention is to provide a method wherein a stator on the axle may rotate with a rotor in the hub if necessary. In the present invention, the stator is constituted by a plurality of permanent magnets and the rotor is formed by a plurality of winding coils, and the rotor may drive the hub directly or indirectly through a reduction mechanism. The stator is pivotally disposed on a fixed axle by means of bearings, and the interior or a lateral side of the stator is provided with a fixed brake element which is preferably a drum brake. But as is well known to those skilled in the art, a disc brake or electric disc brake or any other type of brake is also acceptable. Under normal circumstances, when the induction field drives the rotor to rotate, the brake element is maintained at a first position to stop the stator from rotation, and the rotor is relatively driven by the induction electromagnetic field. But under special circumstances, for instance, when power supply to the rotor is cut off, the brake element may be shifted to a second position to release the stator so that, because the permanent magnets and the silicon steel sheets for use in the winding coils of the rotor attract each other, the stator is caused to rotate with the rotor. Therefore, by means of this method, even when power supply to the rotor is cut off, the hub may still be pushed with ease.

One other aspect of the present invention is to provide a technology to be used in conjunction with any of the above-described methods or technologies for stopping the hub at an appropriate time. To achieve this object, a brake sheet of the disc brake is fixed on the outer rim of the hub driven by the rotor; that is, if the hub is to stop rotation or the speed thereof is to be reduced, it may be controlled by the disc brake.

When an electric vehicle utilizing the above-described techonologies of the present invention moves down a slope, power supply to the winding coils of the rotor may be cut off, and by maintaining the brake element of the stator at a brake position, i.e., the stator is prevented from rotation, then the winding coils are caused to generate an electric current as a result of continuous rotation round the stator, and the current generated may flow through the printed-circuit board and carbon brushes to feed back to a power source, such as batteries.

If the release state of the brake element of the stator is caused to be synchronous with and relative to the brake state of the disc brake on the hub, that is, when the disc brake brakes the hub driven by the rotor and the brake element relatively releases the stator, then the stator will rotate prior to the stop of the rotor due to an inertia force. This is a chain effect of the present invention and is not considered an important feature of the present invention so that it is not discussed in detail herein.

In regards to the various technologies or methods described above, any one of them or two and more technologies may be adopted as desired to achieve the object of driving the motor wheel. As will be described in detail hereinbelow, various preferred embodiments of the present invention are used to illustrate preferred modes of the invention and should not be deemed to restrict the scope of the invention.

The foregoing and other features and advantages of the present invention will be more clearly understood from the following detailed description and the accompanying drawings, in which,
Fig. 1 is a side sectional view of a first preferred embodiment of the present invention;
Fig. 2 is similar to Fig. 1, but showing a second preferred embodiment;
Fig. 3 is similar to Fig. 1, but showing a third preferred embodiment;
Fig. 4 is a view of Fig. 2 taken along line 4-4, showing the structure of the printed-circuit board;
Fig. 5 is an enlarged sectional view of Fig. 4 taken along line 5-5;
Fig. 6 is similar to Fig. 4, but showing another embodiment of the printed-circuit board;
Fig. 7 is similar to Fig. 4, but taken along line 7-7 of Fig. 6;
Fig. 8 is a view of Fig. 2 taken along line 8-8, showing an embodiment of the reduction mechanism; and
Fig. 9 is a view of Fig. 2 taken along line 9-9, showing a drum type brake element.

The main technological subject matter of the present invention has been described as hereinabove. In summary, the method of the present invention is to utilize an induction electromagnetic field provided in the hub of the wheel to drive and support the hub so that it rotates round a fixed axle to cause the wheel to rotate, the method comprising the following steps of: (a) providing a fixed axle; (b) disposing a plurality of radially spaced apart permanent magnets of different polarities on a stator, the magnets being parallel to the axle; (c) arranging a group of radially distributed conductive sheets in an outer area of an annular printed-circuit board, and arranging an exposed group of conductive sheets in the inner area of the annular printed-circuit board as commutators or conductive media for conductive elements such as carbon brushes, each conductive sheet in the inner area is respectively connected to the corresponding conductive sheet in the outer area; (d) fastening the conductive elements onto a securing element attached onto the axle, the conductive elements functioning in parallel to the axle; (e) providing pivotally a wheel frame for use as the hub on the axle, the interior of the wheel frame being provided with a plurality of winding coils each of which corresponding to each of the permanent magnets on the stator to generate therebetween an induction electromagnetic field; (f) fastening the annular printed-circuit board on a lateral side of the wheel frame, and arranging the conductive elements in a way parallel to the axis of the axle to be in contact with the conductive sheets in the inner area of the printed-circuit board; (g) connecting each of the winding coils in the interior of the wheel frame to at least one of the conductive sheets in the outer area of the printed-circuit board; and (h) supplying an electric current to the conductive elements and to the winding coils inside the wheel frame via the printed-circuit board so that the winding coils generate an electromagnetic field corresponding to the permanent magnets on the stator to drive the wheel frame.

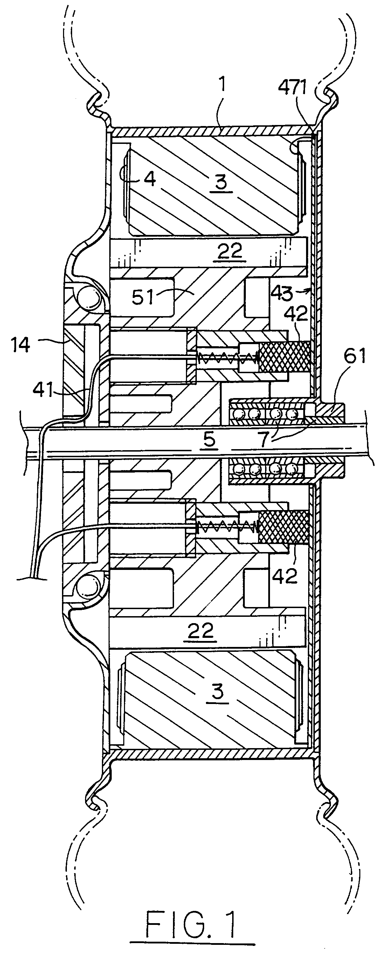

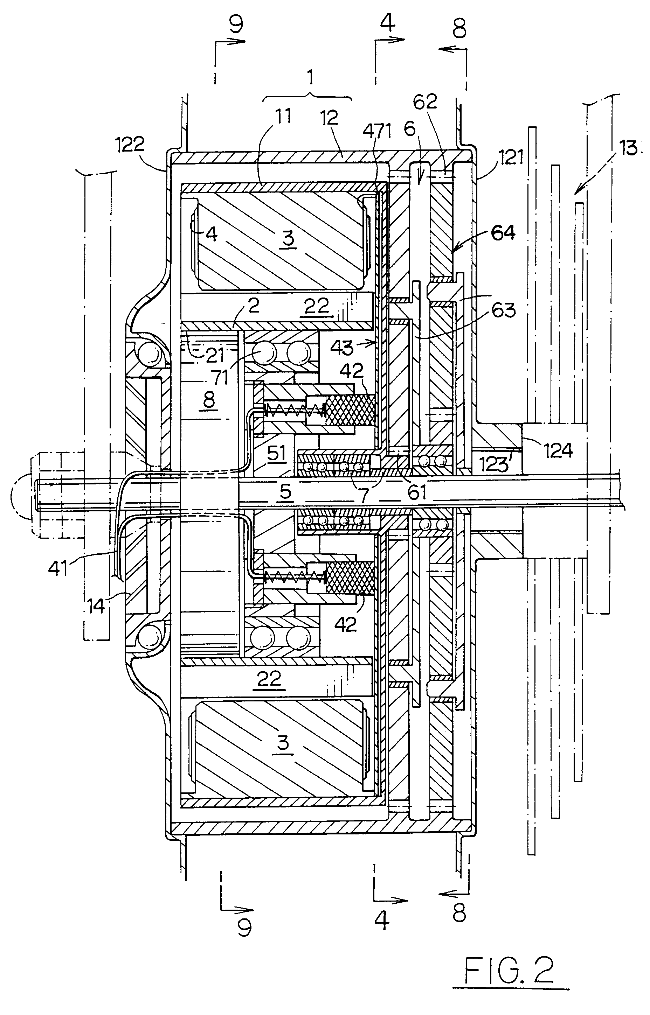

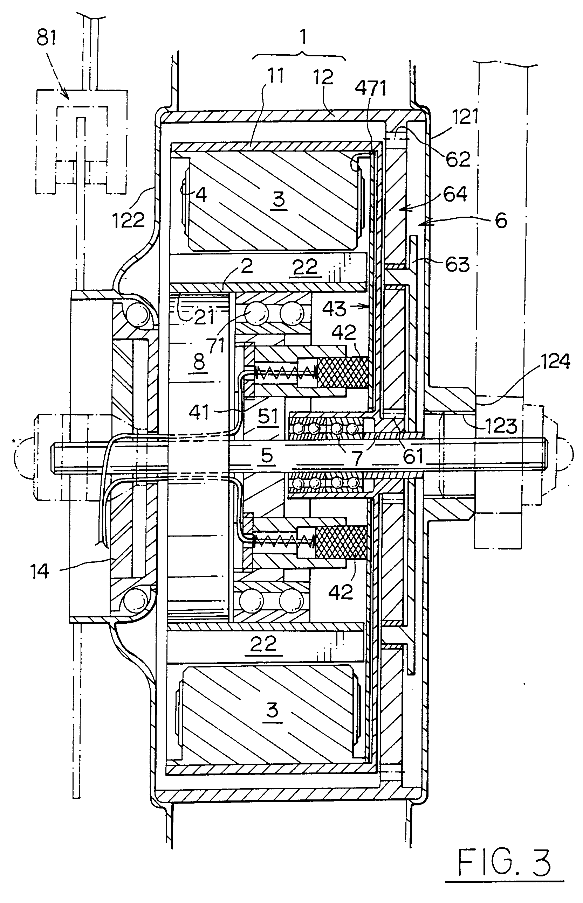

The wheel frame as mentioned in the above method may be configured to be the hub to directly drive the wheel, as illustrated by the preferred embodiment shown in Fig. 1; or it may be designed to indirectly drive the wheel, as illustrated by the preferred embodiments shown in Figs. 2 and 3. But if the wheel is to be indirectly driven, the wheel frame has to be formed of an outer wheel frame and an inner wheel frame wherein the outer wheel frame is used as the hub to support the wheel and the inner wheel frame rotates and, via a reduction mechanism such as gears or pulleys or any other suitable forms, drives the outer wheel frame, and the inner wheel frame is used for securing the rotor formed of a plurality of winding coils. In other words, the method for indirectly driving the wheel further comprises the steps of disposing pivotally an inner wheel frame and an outer wheel frame on the axle with the outer wheel frame surrounding the outer periphery of the inner wheel frame, and providing a plurality of winding coils in the inner wheel frame and fastening the printed-circuit board onto a lateral side of the inner wheel frame and connecting each of the winding coils to a corresponding conductive sheet in the outer area of the printed-circuit board. In addition, the outer wheel frame is utilized as a support for the wheel and a reduction mechanism is provided on a lateral side of the wheel frame, the driving gear of the reduction mechanism being configured to be connected to the inner wheel frame, while the driven gear thereof connected to the outer wheel frame.

To prevent the generation of a resisting force due to the magnetic force of the permanent magnets located on the stator on the steel sheets on the rotor when the wheel is in idle rotation as a result of an interruption of power supply to the winding coils, the stator may be pivotally provided on the axle by means of bearing means, and a brake chamber may also be provided in the stator; additionally, a drum brake element may be fixed on the axle and accommodated in the brake chamber of the stator. When power is being supplied to the winding coils, the brake element keeps on braking the stator to prevent its rotation so that the rotor rotates due to the repulsion of the induction electromagnetic field. Relatively, when power supply to the winding coils is cut off, the brake element releases the stator so that the stator rotates with the rotor, hence the wheel frame. In this manner, possible resistance generated when the hub is in idle rotation due to the attraction of the permanent magnets on the stator may be prevented. Obviously, the brake element has to be controlled by a control element, and a locking element is also needed to lock the stator at a predetermined position after rotation for engagement with the brake element. These details are deemed unneccessary to be discussed in detail herein.

In the method of the present invention, the smooth transmission of the electric current from a power supply element (such as wires connected to batteries) of the axle via the conductive elements to each of the winding coils of the rotor is due to the existence of the annular printed-circuit board 43 as shown in Figs. 1 to 6. The printed-circuit board 43 comprises an annular body 44 having an inner area of a comparatively smaller diameter and an outer area of a comparatively greater diameter, the body 44 having a hole 45 in the center thereof so that when the body 44 and the wheel frame are fastened together, they may be pivotally provided on the axle 5 by means of bearing means; a group of conductive sheets 46 in the inner area for use as commutators being radially distributed and exposed on a lateral side of the body 44; and another group of conductive sheets 47 being radially distributed in the outer area of the body 44 and concealed therein, wherein each of the conductive sheets 47 in the outer area has a section of its outer end 471 protruding from the outer rim of the body 44 to be welded to each of the winding coils 4 on the rotor 3. In addition, each of the conductive sheets 47 in the outer area is connected to any one of the conductive sheets 46 in the inner area; a preferable method is to have the conductive sheets 47 in the outer area and the corresponding conductive sheets 46 in the inner area integrally formed, as shown in the figures, so that the electric current passes via the conductive elements such as carbon brushes 42 to the rotating printed-circuit board 43 in contact therewith so that the electric current may flow via the conductive sheets 46 in the inner area through the conductive sheets 47 in the outer area to each of the winding coils 4 on the rotor 3. In this embodiment, the conductive sheets 46 in the inner area are used as commutators.

In the above-described embodiment of the printed-circuit board 43, when the printed-circuit board 43 receives a great amount of electric current, the carbon brushes 42 and the radially distributed conductive sheets 46 in the inner area of the body 44 may generate sparks upon contact; but the following embodiment will eliminate this drawback.

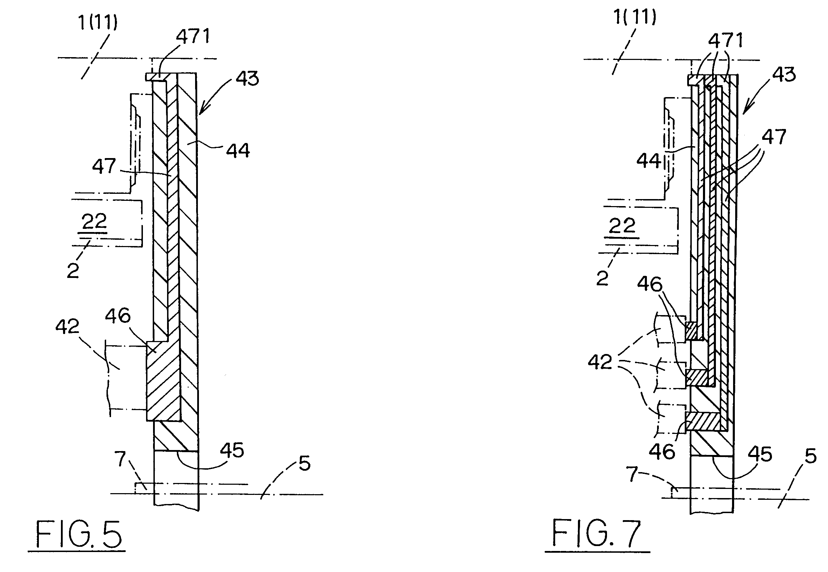

There is another method way of forming the printed-circuit board 43. An embodiment of the printed-circuit board 43 formed according to this method is shown in Figs. 6 and 7. The group of conductive sheets 46 in the inner area of the printed-circuit board body 44 consists of two or more sheets, e.g., three, to constitute concentric conductive sheets of three phases, X, Y and Z. Each of the conductive sheets 46 is in contact with a carbon brush 42, and as in the first embodiment described above, each conductive sheet 46 is connected to any one of the conductive sheets 47 in the outer area of the printed-circuit board 43. In this embodiment, the concentric conductive sheets in the inner area merely act as a conductive medium upon contact with the carbon brushes 42 the function thereof resembles that of a slip ring. Obviously, if the power supplied is an alternating current, it may be output from a frequency modifier to the carbon brushes 42 of the present invention, and if the power supplied is a direct current, it may be output from an electronic commutator to the carbon brushes of the present invention. Such details of power supply are well known in the art and will not be discussed in detail herein. Additionally, although carbon brushes 42 are used herein as an example of the conductive elements, in view of the fast development of material science, it may be anticipated that ultra-conductive materials may be used to make the printed-circuit board 43 as well as the carbon brushes 42 to reduce the loss of electricity in transit.

Preferred embodiments in accordance with the above-described methods of the present invention are respectively described in detail hereinbelow.

### First preferred embodiment:

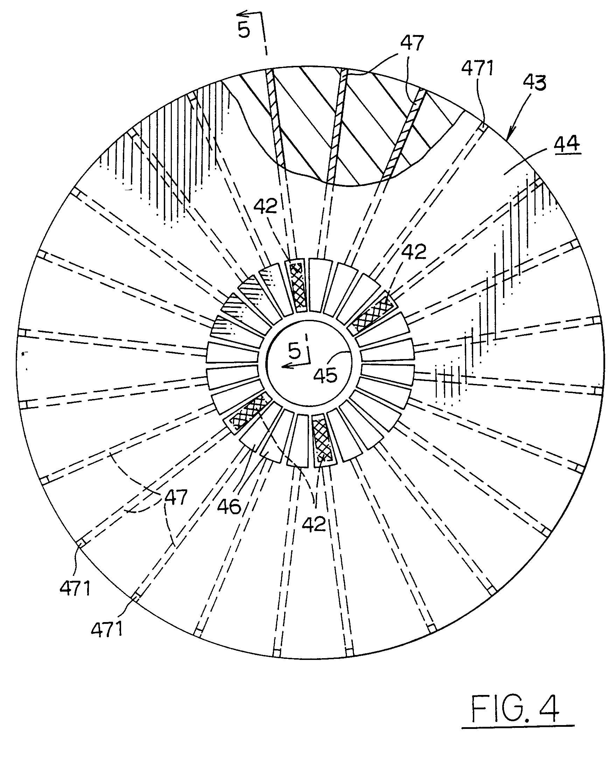

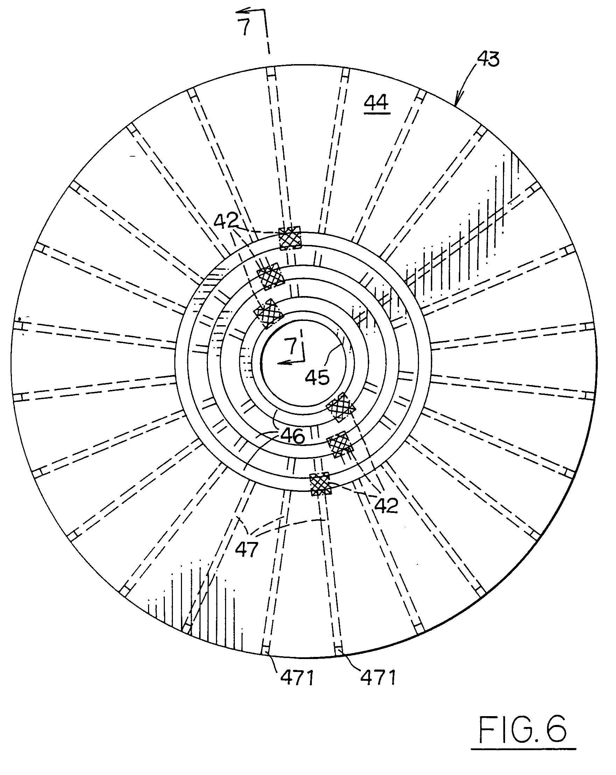

A drivng assembly for motor wheels is shown in Fig. 1. The motor wheel is driven by a hub rotating around a fixed axle 5, the hub being adapted for use as a support for the wheel. The assembly of this preferred embodiment comprises: a stator 2 provided on the axle 5, the stator 2 including a plurality of permanent magnets 22 of different polarities and radially spaced apart thereon, and a plurality of carbon brushes 42 axially fixed on a securing element 51 of the axle 5. The axle 5 is preferably a solid axle so that the diameter thereof may be shortened to the greatest extent, but the necessary rigidity must be maintained. The assembly of this embodiment further comprises an annular printed-circuit board 43 fastened onto a wheel frame and being pivotally provided on the axle 5 therewith, the printed-circuit board 43 having two radially disposed groups of conductive sheets 46 and 47 (see Figs. 4 to 7). These groups of conductive sheets are respectively arranged in the inner area and outer area of the printed-circuit board 43, each conductive sheet 46 in the inner area is exposed on a lateral side of the printed-circuit board body 44 and is respectively connected to any one of the conductive sheets 47 in the outer area; the conductive sheets 47 are concealed within the insulated body 44, and the conductive sheets 46 in the inner area may be in contact with the carbon brushes 42. The two embodiments of the printed-circuit board 43 are respectively described as hereinabove. This preferred embodiment further comprises a wheel frame 1 pivotally provided on the axle 5 by means of bearings 7 to be used as the hub of the motor wheel, the interior of the wheel frame being provided with a plurality of radially distributed winding coils 4 corresponding to the permanent magnets 22 on the stator 2 to constitute a rotor 3 corresponding to the stator 2. Each of the winding coils 4 is respectively connected to at least one of the conductive sheets 47 in the outer area of the printed-circuit board 43. The wheel frame 1 is fastened with the printed-circuit board 43 so that they may commonly rotate on the axle 5, and the current generated in rotation may speedily dissipate the heat emitted by the winding coils 4 within the wheel frame 1. A power supply element 41, e.g., a wire, is attached onto the securing element 51 of the axle 5 for transmitting electricity via the carbon brushes 42 through the printed-circuit board 43 to the winding coils 4 within the wheel frame 1 so that when the winding coils 4 receive the electric current, they may generate an induction field with the permanent magnets 22 on the stator 2 to drive the wheel frame 1 to rotate round the axle 5.

The above-described first preferred embodiment is a most fundamental and typical assembly wherein the electric current supplied from the area of the axle 5 may be transmitted smoothly to the winding coils 4 of the rotating rotor 3 through the carbon brushes 42 and the annular printed-circuit board 43; furthermore, there is no difficulty in manufacturing or assembling this embodiment of the present invention. The following preferred embodiments are modifications of this fundamental structure and, like the above-described embodiment, any one of the two constructions of the printed-circuit board may be selected to be used in conjunction therewith as desired.

### Second preferred embodiment:

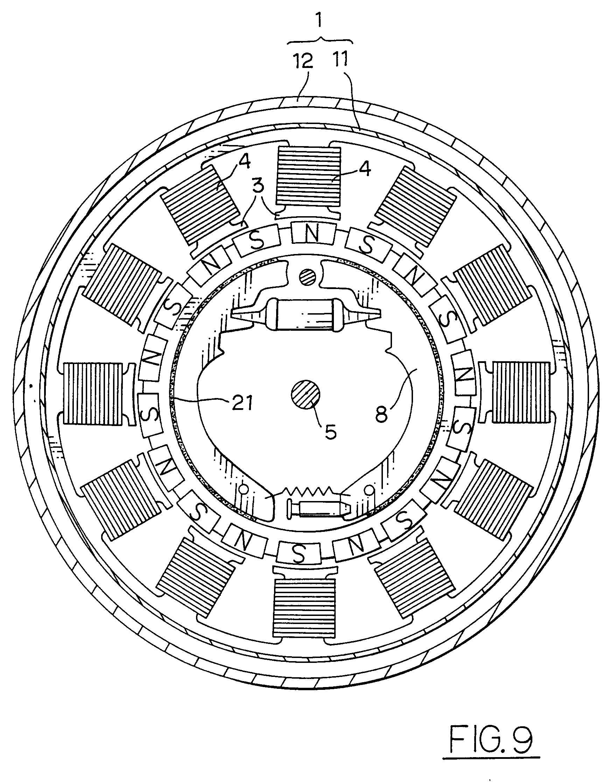

With reference to the preferred embodiments shown in Figs. 2 and 3, the stator 2 is pivotally disposed on the securing element 51 of the axle 5 by means of bearing means 71. In addition, a brake element 8 is disposed on the axle 5 adjacent to the stator 2. The brake element 8 in a brake state brakes the stator 2 from rotation. On the other hand, when the brake element 8 is in a release state, it cannot check the stator 2 so that the stator 2 may rotate with the rotor 3. The stator 2 may also be provided with a brake chamber 21, and the brake element 8 may be a brake drum contained therein, as shown in Fig. 9. This embodiment may be combined with the first preferred embodiment using the wheel frame 1 of a single body as the hub; or it may be combined with other preferred embodiments to form a hub with a reduction mechanism.

### Third preferred embodiment:

This preferred embodiment is shown in Figs. 2 and 3. The major difference between this embodiment and the first embodiment lies in the configuration of the wheel frame 1. In the first embodiment the wheel frame 1 is a single body forming the hub for supporting the motor wheel and has no reduction mechanism. But in this embodiment, the wheel frame 1 consists of an outer wheel frame and an inner wheel frame. This embodiment is particularly adapted for use in low-speed vehicles like bicycles and wheelchairs. Although the reduction mechanism illustrated in the figures is a single or double planetary gear set, as is well known to those skilled in the science of mechanics, the so-called reduction mechanism herein refers to a gear type, pulley type, or any other type as deemed most suitable, and it should be understood that the form of the reduction mechanism is not restricted to the examples illustrated in Figs. 2 and 3.

The wheel frame 1 according to this embodiment includes the outer wheel frame 12 and the inner wheel frame 11 respectively disposed pivotally on the axle 5. The outer wheel frame 12 supports the hub of the motor wheel, while the inner wheel frame 11 has a plurality of winding coils disposed in the interior thereof and being fastened to the printed-circuit board 43 to rotate therewith. In this embodiment, one lateral side of the wheel frame is provided with a reduction mechanism 6 having a driving gear 61 and a driven gear 62, the inner wheel frame 11 being connected to the driving gear 61 and the outer wheel frame 12 being connected to the driven gear 62 so that power generated by the rotation of the inner wheel frame 11 is reduced by the reduction mechanism 6 and then transmitted to the outer wheel frame 12. The reduction mechanism 6 shown in Figs. 2, 3 and 8 is a planetary gear type, wherein Fig. 2 shows a double reduction mechanism and Fig. 3 shows a single reduction mechanism.

### Fourth preferred embodiment:

This preferred embodiment is similar to the third preferred embodiment. But as Fig. 2 shows, the outer wheel frame 12 has a first lateral side 121 and a second lateral side 122, wherein the first lateral side 121 is provided with a screw hole 123 for engagement with the shaft of a wheel 13, which may be a pulley type speed changer, or a chain wheel type as shown by imaginary lines in Fig. 2, and the chain wheel is a multiple chain wheel unit having various teeth number; this embodiment is very suitable for use in bicycles with multi-speed change gears.

### Fifth preferred embodiment:

This preferred embodiment is similar to the fourth preferred embodiment, but as shown by the imaginary lines in Fig. 3, the second lateral side 122 of the outer wheel frame 12 is provided with a disc brake element 81 for braking the outer wheel frame 12 when necessary.

As shown in Figs. 2 and 3, the first lateral side 121 at the right side of the outer wheel frame 12 extends outwardly to form a flange 124 in which the screw hole 123 with a diameter of 20 - 25 mm is provided, and the diameter of the axle 5 is configured to be less than 15 mm. In this manner, the interface formed by the flange 124 may be directly linked to a shaft of the conventional Shimano speed change gear. The dimension of the respective diameters of the screw hole 123 and the axle 5 is mentioned herein to illustrate that when this embodiment is used in bicycles, it may be connected to the shaft of a Shimano speed change gear, but it should be understood that this embodiment does not restrict the respective diameters of the screw hole 123 and the axle 5 of the present invention. As is known to those skilled in the art, if the present invention is used in motorcycles, automobiles, or wheelchairs, or it is used to be connected with other existing or prospective transmission gear shafts, the diameters of the screw hole 123 and the axle 5 obviously do not fall into the above-mentioned range. This preferred embodiment owes its distinguishing feature over the design of prior motor wheels to the fact that the axle is diminished to the greatest possible extent and is formed of a solid rod, and the power supply element 41 may still enter via the second lateral side 122 into the outer wheel frame 12 and be connected to the carbon brushes via the brake element 8. Prior motor wheels cannot be directly connected to the shaft of a Shimano speed change gear shaft as in this preferred embodiment.

### Other preferred embodiments:

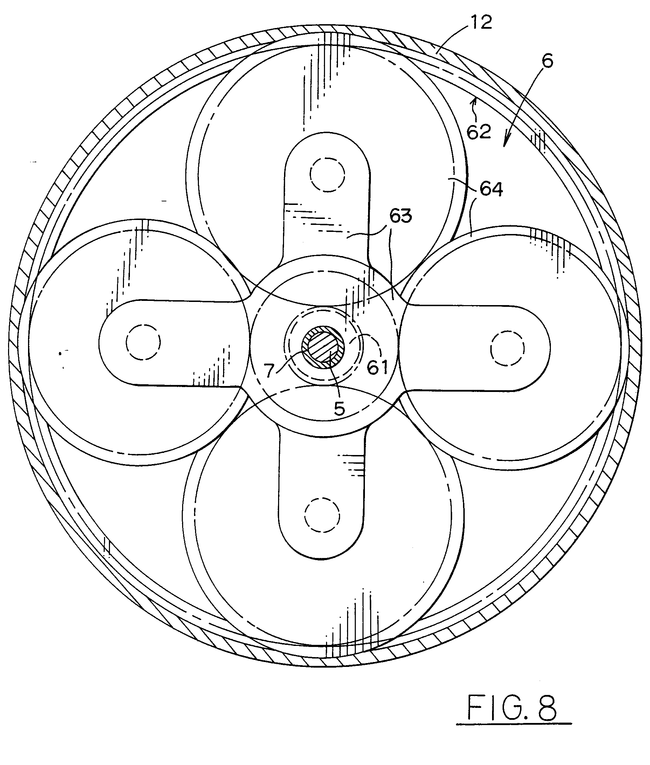

As shown in Figs. 2 and 3, the second lateral side 122 of the outer wheel frame 12 may further include a cooling wing 14 to reinforce the flow of ambient air through the wheel frame to help dissipate heat, or a filter mesh may also be provided inside the cooling wing 14. With reference to Figs. 2 and 8, the inner rim of the outer wheel frame 12 may be configured to be an inner gear to constitute the driven gear 62 of the reduction mechanism 6, the driving gear 61 driving the driven gear 62 by means of an idle gear set 64 on links 63. These and other similar details are considered modifications and variations of the present invention.

Although the present invention has been illustrated and described with reference to the preferred embodiments thereof, it should be understood that it is in no way limited to the details of such embodiments, but is capable of numerous modifications.

## Claims

1. A driving assembly for motor wheels in which a motor wheel is driven by a hub rotating round a fixed axle, said hub being a support for said motor wheel, said driving assembly comprising:
a stator provided on a securing element on said axle, said stator comprising a plurality of permanent magnets of different polarities radially spaced apart, said permanent magnets being parallel to said axle;
an annular printed-circuit board with a body formed of an insulating material, said printed-circuit board having two groups of conductive sheets respectively distributed in an inner area and an outer area of said printed-circuit board, each conductive sheet in said inner area being connected to a corresponding conductive sheet in said outer area;
a plurality of conductive elements, capable of contact with said conductive sheets in said inner area of said printed-circuit board;
a wheel frame pivotally disposed on said axle for use as said hub, the interior thereof being provided with a plurality of radially distributed winding coils corresponding to said permanent magnets for forming a rotor corresponding to said stator, and each of said winding coils being connected to at least one of said conductive sheets in said outer area of said printed-circuit board, said wheel frame being fastened with said printed-circuit board so that they commonly rotate on said axle to speedily dissipate heat emitted by said winding coils by means of air currents generated in rotation; and
a power supply element on said securing element on said axle for supplying an electric current via said conductive elements and said printed-circuit board to said winding coils inside said wheel frame so that upon receipt of the electric current, said winding coils on said rotor and said permanent magnets on said stator generate therebetween an induction electromagnetic field to cause said wheel frame to rotate round said axle.

2. A driving assembly as claimed in claim 1, wherein said stator is pivotally disposed on said axle by means of bearing means.

3. A driving assembly as claimed in claim 2, wherein said axle is provided with a brake element adjacent to said stator, said brake element in a brake state braking said stator from rotation.

4. A driving assembly as claimed in any one of claims 1 to 3, wherein said wheel frame comprises an outer wheel frame and an inner wheel frame respectively disposed pivotally on said axle, said inner wheel frame accommodating therein said winding coils and being attached to said printed-circuit board for common rotation, and said outer wheel frame being adapted for use as a support for said hub, and a lateral side of said wheel frame being provided with a reduction mechanism so that power generated by the rotation of said inner wheel frame is reduced via said reduction mechanism and then transmitted to said outer wheel frame.

5. A driving assembly as claimed in claim 4, wherein said reduction mechanism is a planetary gear set having a driving gear and a driven gear, said inner wheel frame being connected to said driving gear of said reduction mechanism and said outer wheel frame being connected to said driven gear of said reduction mechanism.

6. A driving assembly as claimed in claim 4 or 5, wherein said outer wheel frame has a first lateral side and a second lateral side, said first lateral side having a hole for engagement with a shaft of a wheel.

7. A driving assembly as claimed in claim 6, wherein said first lateral side of said outer wheel frame has a flange in which is disposed said hole the diameter thereof being within the range of 20-25 mm.

8. A driving assembly as claimed in any one of claims 4 to 7, wherein said outer wheel frame has a first lateral side and a second lateral side, said second side being provided with a disc brake element for braking said outer wheel frame.

9. A driving assembly as claimed in any one of the above claims wherein the diameter of said axle is less than 15 mm.

10. A driving assembly as claimed in claims 6 or 7, wherein said hole is for engagement with a shaft of a Shimano speed change gear.

11. A driving assembly as claimed in any one of the above claims, wherein said conductive sheets in said outer area of said annular printed-circuit board are radially distributed and concealed in said body of said printed-circuit board.

12. A driving assembly as claimed in any one of the above claims, wherein said conductive sheets in said inner area of said annular printed-circuit board are radially distributed and correspond to said conductive sheets in said outer area of said printed-circuit board, said conductive sheets in said inner area of said printed-circuit board being exposed on a lateral side of said body for contact with said conductive elements; or said conductive sheets in said inner area are constituted by a plurality of concentric conductive rings exposed on a lateral side of said body of said printed-circuit board for contact with said conductive elements.

13. A method for driving motor wheels wherein a hub for use as a support for a motor wheel is rotated round a fixed axle which is hollow or solid, said method comprising:
securing said fixed axle so that it does not rotate, and attaching thereon a securing element;
arranging a plurality of radially spaced apart permanent magnets of different polarities on a stator;
disposing said stator around said securing element on said fixed axle;
arranging a group of conductive sheets in an outer area of a body of an annular printed-circuit board, said conductive sheeets being concealed in said body, and arranging a group of conductive sheets in an inner area of said body of said printed-circuit board, said conductive sheets in said inner area being exposed on said body, and each of said conductive sheets in said inner area being connected to each of said conductive sheets in said outer area;
fastening a plurality of conductive elements on said securing element on said fixed axle so that said conductive elements are parallel to said fixed axle and axially in contact with said conductive sheets in said inner area of said printed-circuit board;
providing pivotally a wheel frame for use as said hub on said fixed axle, and providing in the interior thereof a plurality of winding coils corresponding to said permanent magnets on said stator for generating therebetween an induction electromagnetic field;
fastening said printed-circuit board onto said wheel frame and connecting each of said winding coils in the interior of said hub with at least one of said conductive sheets in said outer area of said printed-circuit board; and
supplying an electric current to said conductive elements via said printed-circuit board to said winding coils within said wheel frame so that said winding coils corresponding to said permanent magnets on said stator generate therebetween an induction electromagnetic field to drive said wheel frame to rotate.

14. A method for driving a motor wheel as claimed in claim 13, further comprising the additional step of pivotally providing said stator on said securing element on said fixed axle.

15. A method for driving motor wheels as claimed in claim 14, comprising the following steps of:
providing a brake chamber in said stator; and
securing a drum brake element on said fixed axle and accommodating said drum brake element in said brake chamber in said stator.

16. A method for driving motor wheels as claimed in any one of claims 13 to 15, comprising the additional steps of:
forming said wheel frame by an inner wheel frame pivotally disposed on said axle and an outer wheel frame pivotally disposed on said axle and around the outer periphery of said inner wheel frame;
providing said winding coils in the interior of said inner wheel frame and fastening said printed-circuit board onto said inner wheel frame so that each of said winding coils is connected to at least one of said conductive sheets in said outer area of said printed-circuit board;
utilizing said outer wheel frame as a hub for supporting said motor wheel; and
providing a reduction mechanism on one side of said wheel frame so that a driving gear thereof connects to said inner wheel frame and a driven gear thereof connects to said outer wheel frame.

17. A method for driving motor wheels as claimed in claim 16, comprising the additional step of:
providing a brake element for braking said outer wheel frame.

18. A method for driving motor wheels as claimed in any one of claims 13 to 17, comprising the additional step of: distributing said conductive sheets in said inner area of said printed-circuit board in a radial manner or arranging said conductive sheets in said inner area of said printed-circuit board so that they form concentric conductive rings.

19. An annular printed-circuit board adapted for use in a hub driven by an induction electromagnetic field generated by a rotor and a stator relative thereto for transmitting an electric current via conductive elements to a plurality of winding coils on said rotor so that said winding coils relative to a plurality of permanent magnets on said stator generate an induction electromagnetic field to drive said rotor so that said hub with said rotor fixed thereon causes a motor wheel to rotate around an axle, said printed-circuit board comprising:
an annular body, having an inner area of a smaller diameter and an outer area of a greater diameter, and a hole in the center thereof;
a group of conductive sheets in said inner area distributed on a lateral side of said body and exposed thereon; and
a group of radially distributed conductive sheets in said outer area of said body and being concealed within said body, wherein a section of the outer end of each of said conductive sheets in said outer area protrudes from an outer rim of said body to be welded to each of said winding coils on said rotor.

20. An annular printed-circuit board as claimed in claim 19, wherein said conductive sheets in said inner area of said body are radially or concentrically distributed thereon.
